(19) Europäisches Patentamt
European Patent Office
Office européen des brevets

(11) Veröffentlichungsnummer : **0 336 282 B1**

(12) **EUROPÄISCHE PATENTSCHRIFT**

(45) Veröffentlichungstag der Patentschrift :
**10.06.92 Patentblatt 92/24**

(51) Int. Cl.⁵ : **H01J 35/00, H01J 33/00, H01S 3/09**

(21) Anmeldenummer : **89105565.9**

(22) Anmeldetag : **29.03.89**

(54) **Plasma-Röntgenröhre, insbesondere zur Röntgen-Vorionisierung von Gaslasern, Verfahren zur Erzeugung von Röntgenstrahlung miteiner solchen Röntgenröhre und Verwendung letzterer.**

(30) Priorität : **08.04.88 DE 3811818**
**14.02.89 DE 3904417**

(43) Veröffentlichungstag der Anmeldung :
**11.10.89 Patentblatt 89/41**

(45) Bekanntmachung des Hinweises auf die Patenterteilung :
**10.06.92 Patentblatt 92/24**

(84) Benannte Vertragsstaaten :
**AT CH DE FR GB IT LI**

(56) Entgegenhaltungen :
FR-A- 2 204 882
US-A- 4 025 818
US-A- 4 694 222
APPLIED PHYSICS LETTERS, Band 33, Nr. 11, 1. Dezember 1978, Seiten 913-915, American Institute of Physics, New York, US; S.SUMIDA et al.: "X-ray-preionized high-pressure KrF laser"
JOURNAL OF PHYSICS E: SCIENTIFIC IN-STRUMENTS, Band 12, Nr. 2, 1979, Seiten 115-118, The Institute of Physics, Bristol, GB;G.G. ISAACS et al.: "A cold-cathode glow discharge electron gun for high-pressure CO2 laser ionisation"

(56) Entgegenhaltungen :
IEEE JOURNAL OF QUANTUM ELECTRONICS, Band QE-14, Nr. 2, Februar 1978, Seiten 126-129, IEEE, New York, US; W.M. CLARK, Jr. etal.: "A long pul3e, high-current electron gun for epsilon-beam sustained excimer lasers"
TECHNICAL DIGEST OF THE INTERNATIO-NAL ELECTRON DEVICES MEETING, Was-hington, 9.-11. Dezember 1974, Seiten 169-172, New York,US; J.R. BAYLESS: "The plasma-cathode electron gun"
APPLIED PHYSICS B/PHOTOPHYSICS & LA-SER CHEMISTRY, Band B44, Nr. 1, September 1987, Seiten 37-39, Berlin, DE; R.J.M.BONNIE et al.: "High pressure X-ray preionized TE-MA-CO2 laser"

(73) Patentinhaber : SIEMENS AKTIENGESELLSCHAFT
Wittelsbacherplatz 2
W-8000 München 2 (DE)

(72) Erfinder : Friede, Dirk, Dr.
Anna-Hermann-Strasse 40
W-8522 Herzogenaurach (DE)
Erfinder : Cirkel, Hans-Jürgen, Dr.
Holunderweg 8
W-8525 Uttenreuth (DE)
Erfinder : Baumgartl, Rudolf
Am Kapellenplatz 10
W-8755 Alzenau-Hörstein (DE)
Erfinder : Schmutzler, Matthias
Heinestrasse 5a
W-8750 Aschaffenburg (DE)

EP 0 336 282 B1

EP 0 336 282 B1

## Beschreibung

Die Erfindung bezieht sich auf eine Plasma-Röntgenröhre mit hohen Elektronenstromdichten, insbesondere zur Röntgen-Vorionisierung von Gaslasern.

Es ist bekannt, Elektronenkanonen als eine Baueinheit auszubilden, welche an eine durch elektrische Hochspannungsentladung gepumpte Laserkammer angebaut bzw. angeflanscht werden kann, wobei der Elektronenstrahl auf eine Folie trifft, welche das Volumen der Baueinheit der Elektronenkanone von demjenigen der Laserkammer abtrennt und wobei die durch Auftreffen der Elektronen auf die dünne Metallfolie ausgelöste Bremsstrahlung zur Vorionisierung des Entladungsvolumens der Laserkammer dient, siehe Applied Physics Letter 34 (8), 15. April 1979, Seiten 505 - 508 (S. Lin und J. I. Levatter: "X-Ray Preionisation for Electric Discharge Lasers").

Die Erfindung geht von der folgenden Problemstellung aus: Bei der Erzeugung von Röntgenbremsstrahlung zur Vorionisierung von gepulsten Gasentladungen, z.B. im speziellen Fall eines Hochseistungslasers mit einem großen Entladungsvolumen von z.B. 450 x 40 x 56 mm$^3$, kommt es auf eine sehr große Betriebszuverlässigkeit an. Es müssen auf einem großflächigen Strahlquerschnitt hohe Elektronenstromdichten erzeugt werden, um einen entsprechenden großflächigen Strahlquerschnitt bei der Brems- bzw. Röntgenstrahlung hervorzurufen. Die Röntgenvorionisierungseinheit muß bei hoher Zuverlässigkeit einen Betrieb mit hohen Wiederholraten gewährleisten, und die Intensität der vom Target emittierten Röntgenstrahlung muß ausreichen, um die erforderliche hohe Startelektronendichte für eine homogene Hochdruckglimmentladung im Lasergas zwischen den Elektroden bereitzustellen. Die Bereitstellung dieser Startelektronendichte muß in einem engen zeitlichen Fenster vor Zündung der Laser-Hauptentladung erfolgen. Feldemissionsröhren erfüllen diese Anforderungen insofern nicht, als ihre Lebensdauer bei Dauerbetrieb und hohen Wiederholraten begrenzt ist (Verrundung der schneidenförmigen Elektrode, dadurch stark schwankende Intensitätsverteilung der Röntgenstrahlung). Die thermische Belastung der Feldemissions-Kathode führt zu Sputterprozessen, die, wie gesagt, eine Verrunderung der Schneide zur Folge gaben.

Der Erfindung liegt die Aufgabe zugrunde, eine Plasma-Röntgenröhre der eingangs genannten Art zu schaffen, welche eine im Vergleich zu Feldemissionsröhren wesentlich vergrößerte Lebensdauer aufweist und mit welcher hohe Elektronenstromdichten bei großflächigem Strahlquerschnitt insbesondere zur Röntgenvorionisierung von Gaslasern bereitgestellt werden können, und dies insbesondere für den Pulsbetrieb, wobei in kürzester Zeit ausreichend hohe Ladungsträgerdichten im Entladungsvolumen der Plasma-Röntgenröhre vorhanden sein müssen. Insbesondere soll die Plasma-Röntgenröhre für den Pulsbetrieb bei TE-Lasern (Transversally excited) und hier vor allem für Excimer-Laser geeignet sein.

Erfindungsgemäß wird die gestellte Aufgabe bei einer Plasma-Röntgenröhre der eingangs definierten Art durch die im Anspruch 1 angegebene Merkmalskombination a - d gelöst. Vorteilhafte Weiterbildungen sind in den Patentansprüchen 2 bis 8 angegeben.

Gegenstand der Erfindung ist auch ein verfahren zur Erzeugung von Röntgenstrahlung, insbesondere zur Röntgen-Vorionisierung von Gaslasern, wie es im Kennzeichen des Patentanspruchs 9 charakterisiert ist. Eine vorteilhafte Weiterbildung des Verfahrens ist im Anspruch 10 angegeben.

Ferner ist Gegenstand der Erfindung eine Verwendung der Plasma-Röntgenröhre nach den Patentansprüchen 1 bis 8 als Elektronenkanone bei entsprechend elektronendurchlässigerer Gestaltung des Röntgentargets in Form eines Austrittsfensters.

Die mit der Erfindung erzielbaren Vorteile sind vor allem in einer hohen Intensität der Röntgenbremsstrahlung und in einer guten Homogenität der Strahlungsverteilung - auch unter Berücksichtigung der Absorptionsverhältnisse im Röntgenfenster und im Lasergas - zu sehen, so daß eine ausreichende Vorionisierungsdichte erreicht werden kann. Diese Werte können gemäß dem Patentanspruch 9 optimiert werden. Beim Pulsbetrieb nach Patentanspruch 10 beträgt die Dauer eines Röntgenpulses etwa 50 ns FWHM (FWHM = Zeitdauer bei halbem Maximum). Die Stromdichte des gepulsten Elektronenstrahls, dessen Abbremsung in einem Material hoher Ordnungszahl zur Emission von Röntgenbremsstrahlung führt, beträgt beispielsweise 5 bis 10 A/cm$^2$ bei einer Beschleunigungsspannung von 60 bis 120 kV im Maximum, und diese Daten sind im wesentlichen durch die Eigenschaften des Hochspannungsgenerators gegeben, der die Röhre versorgt. Im Gegensatz zur Feldemission ist beim Erfindungsgegenstand die thermische Belastung der Kathodenoberfläche viel geringer und hat kaum einen die Lebensdauer begrenzenden Einfluß auf das physikalische Prinzip der Elektronenerzeugung. Zudem bieten sich, wie gesagt, über Gasdruck und Plasmadichte Möglichkeiten an, Einfluß auf das Röhrenverhalten zu nehmen.

Durch die US-PS 3 970 892 ist zwar eine Ionenplasma-Elektronenkanone bekannt, welche zur Erzeugung von Ladungsträgern in der Plasmakammer mit einem Zünddraht und einer Hohlkathodenentladung arbeitet. Hierbei ist jedoch die Hohlkathodenanode als isoliert montiertes Gitter ausgebildet, welches zusätzlich zum Beschleunigungsanodengitter den Querschnitt des Elektronenstrahls überdeckt. Dieses Anordnung ist hin-

2

EP 0 336 282 B1

sichtlich der Elektronenstromdichte durch die Doppelgitteranordnung ungünstiger. Außerdem ist das isoliert angeordnete Hohlkathodenanodengitter elektrisch und mechanisch aufwendiger.

Im folgenden werden eine Plasma-Röntgenröhre nach der Erfindung, ihre Wirkungsweise und das Verfahren zur Erzeugung von Röntgenstrahlung mit einer solchen Röntgenröhre anhand eines in der Zeichnung dargestellten Ausführungsbeispiels noch näher erläutert. Darin zeigt in schematischer, vereinfachter Darstellung:

FIG 1 einen Querschnitt durch die Plasma-Röntgenröhre, welche z.B. eine Länge von einem halben Meter (senkrecht zur Papierebene) haben kann;

FIG 2 ein Diagramm, in welchem der Verlauf der Spannung $U_Z$ am Zünddraht und des Hohlkathodenstromes $I_{HK}$ über der Zeitachse t aufgetragen ist, wobei zwei Ordinatenachsen, die eine mit der Spannung U in kV und die andere mit dem Strom I in kA, verwendet sind;

FIG 3 in einem entsprechenden Diagramm in einem Zeitausschnitt den Verlauf des Hohlkathodenstromes $I_{HK}$ und der Beschleunigungsspannung $U_B$ und

FIG 4 den Verlauf der Beschleunigungsspannung $U_B$ und der Röntgenamplitude $U_X$ über der Zeitachse, wobei für beide Größen $U_B$ und $U_X$ die Dimension U in kV gilt.

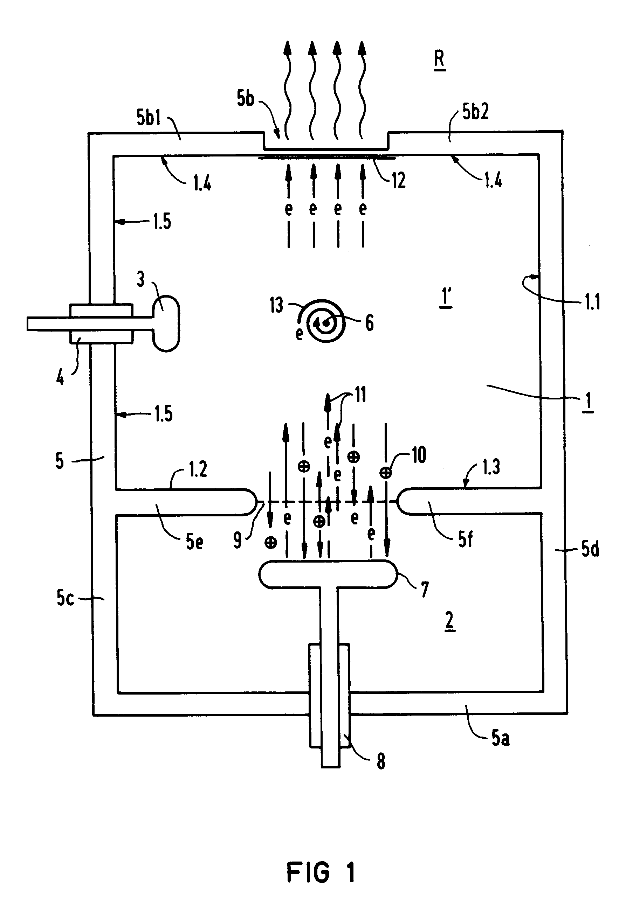

In ihrem prinzipiellen, geometrischen Aufbau besteht die Röntgenröhre R, dargestellt in Figur 1, aus zwei durch ein hochtransparentes Gitter 9 voneinander getrennten Kammern: Plasmaraum 1 und Beschleunigungsraum 2.

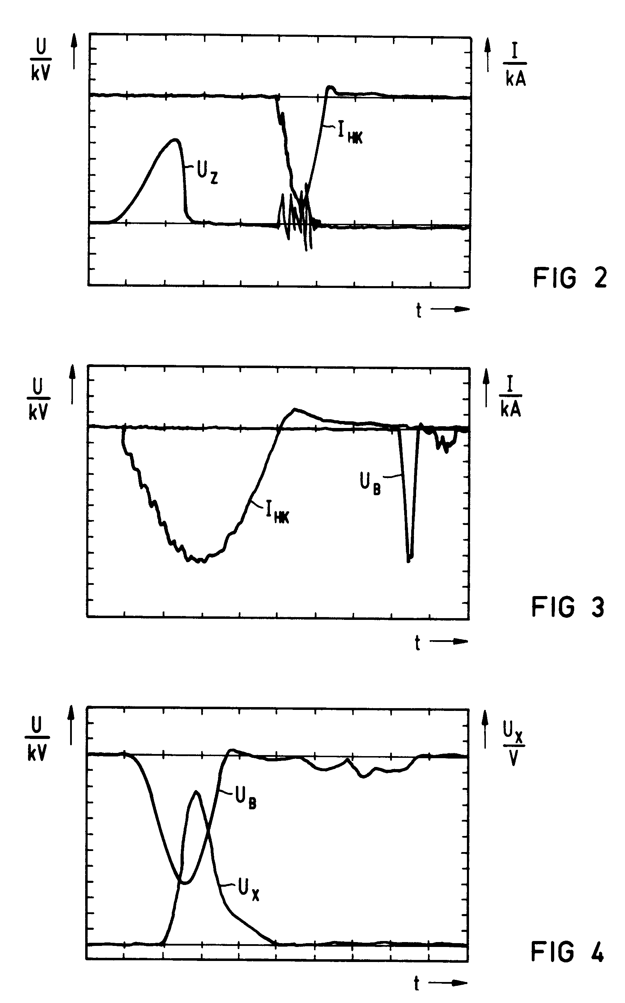

In der ersten Kammer, dem Plasmaraum 1, wird beiniedrigem Partialdruck eine Gasentladung gezündet, durch welche sich ein Plasma ausbildet. Die Entladungsform der Hohlkathodenentladung läßt eine hohe Stromverstärkung zu und ermöglicht damit die Bereitstellung großer Ladungsträgerdichten im Niederdruckbereich. Hohlkathode 1' ist die gesamte Innenfläche 1.1 bis 1.4 und der größte Teil von 1.5 der ersten Kammer 1 mit Ausnahme anodennaher Bereiche von 1.5; sie umschließt damit annähernd den gesamten Raumwinkel. Die Anode 3 ist seitlich in den Kathodenraum 1 eingebracht. Sie wird über eine Isolierdurchführung 4 in der Kathodenwand 5 elektrisch versorgt. Ihr Abstand zur umgebenden Wand 5 ist so bemessen, daß in diesem Bereich kein Überschlag stattfindet. Diese spezielle Anordnung der Anode 3 stellt einen wesentlichen Vorteil im Vergleich zur bekannten Anordnung nach der US-PS 3 970 892 dar, bei welcher die Anode als Gitter dem Beschleunigungsgitter vorgelagert ist, siehe dort Figur 2. Durch die seitliche Anordnung der Anode 3 innerhalb Hohlkathode 1' und ihre massive Ausführung ergeben sich die Vorteile

– eines höheren Wirkungsgrades, da eine Schwächung des sekundär erzeugten Elektronenstrahls unter dem Einfluß des Anodengitters vermieden wird,

– eine höhere thermische Belastbarkeit der massiven Anode und

– eine einfachere mechanische Ausführung.

Um bei der vorgegebenen Geometrie eine sichere Zündung der Hohlkathodenentladung und eine möglichst gleichmäßige Verteilung der Stromdichte auf der gesamten Kathodenoberfläche zu gewährleisten, ist eine Anfangskonzentration an Ladungsträgern notwendig. Dieses Startplasma wird durch die Entladung eines dünnen Drahtes 6 bereitgestellt, der innerhalb der Hohlkathode 1' aufgespannt ist und über eine isolierte Durchführung (nicht dargestellt) elektrisch versorgt wird. Sowohl diese Zünddrahtentladung als auch die Hohlkathodenentladung werden gepulst betrieben.

In der zweiten Kammer, dem Beschleunigungsraum 2, führen Beschleunigungsvorgänge von Ladungsträgern zur Erzeugung eines hochenergetischen Elektronenstrahls. An eine langgestreckte Elektrode 7 wird über eine durch die Wand 5a geführte hochspannungsisolierte Durchführung 8 ein hohes negatives Potential gelegt. Vorgegeben durch die Erfordernisse, die an die Vorionisierung eines Entladungsgepumpten Excimerlasers gestellt sind, erfolgt die Beschleunigung der Ladungsträger gepulst (im Gegensatz zur genannten US-PS). Der Abstand zwischen Beschleunigungskathode 7 und -gitter 9 ist so gewählt, daß bei dem niedrigen Betriebsdruck der Röhre kein Überschlag erfolgt. Im Feld der Beschleunigungskathode 7 gelangen Ionen 10 aus dem Niederdruckplasma der ersten Kammer durch das hochtransparente Gitter 9 und werden gegen die Kathodenoberfläche beschleunigt. Entsprechend ihrer kinetischen Energie lösen sie beim Aufprall auf die Kathode Sekundärelektronen 11 aus. Die sekundär erzeugten Elektronen werden nun ihrerseits gegen das Gitter 9 beschleunigt und gelangen durch den Plasmaraum 1 auf das Röntgentarget 12. Ihre mittlere freie Weglänge ist größer als die Gehäuseabmessungen, so daß Intensitäts- und Energieverluste durch etwaige Stoßprozesse sehr gering sind. Das im Querschnitt rechteckige, langgestreckte Gehäuse 5 weist die Seitenwände 5c, 5d, die Targetwand 5b und die die Kathode 7 halternde Wand 5a auf. Die Schichtdicken von Target- und Röntgenfenster 12 sind so bemessen, daß Verluste an Röntgenintensität durch Absorption klein gehalten werden und der Druckdifferenz gegenüber Atmosphäre bzw. dem Druck im Laser Rechnung getragen wird. Mit 5e, 5f sind noch von den Seitenwänden 5c bzw. 5d sich nach innen erstreckende Schirmwände bezeichnet, welche den Plasmaraum 1 vom Beschleunigungsraum 2 bis auf den Flächenbereich des Gitters 9, entsprechend der Grundfläche des Kopfes der Kathode 7, abschirmen, 5b1, 5b2 sind Teilwände. Versuche haben gezeigt, daß

EP 0 336 282 B1

Röntgenröhren nach dem dargestellten Funktionsprinzip zur Vorionisierung von Excimerlasern sich bewähren. Die räumliche Ausdehnung der Röhren ist den Dimensionen der zu ionisierenden Volumina angepaßt. Intensität und spektrale Energieverteilung der Röntgenbremsstrahlung sind mit dem Ziel einer ausreichenden Vorionisierungsdichte im Lasergas gewählt. Die Intensitätsverteilung über die Targetfläche genügt dem Erfordernis einer homogenen Vorionisierung des aktiven Laservolumens.

Die Darstellung von Strom- und Spannungsverläufen (FIG 2 - 4) in zeitlicher Folge verdeutlicht die Funktionsweisen der Röhre: Figur 2 zeigt in einem Diagramm mit den Ordinatenachsen U in kV und I in kA die Spannung $U_Z$ am Zünddraht sowie den Entladungsstrom $I_{HK}(kA)$ der Hohlkathodenentladung über der Zeitachse t. Bei Anlegen einer positiven Spannung bildet sich um den Draht ein elektrisches Feld aus. Unter dessen Einfluß werden aufgrund von Umgebungsstrahlung vorhandene Elektronen auf lange Wege gezwungen. die Wahrscheinlichkeit der Ionisierung von Gasatomen steigt an; Elektronenlawinen bilden sich aus und führen zur Zündung der Drahtentladung. Die Zündverzugszeit ist im wesentlichen abhängig von Feldstärke und Gasdruck.

Der Zeitpunkt für die elektrische Ansteuerung der Hohlkathodenentladung ist mittels einer elektronischen Steuereinheit so gewählt, daß die Zünddrahtentladung in jedem Fall bereits erfolgt ist. Die Entladungsstromstärken der Hohlkathodenentladung sind weit größer als die der Zünddrahtentladung.

Figur 3 zeigt in einem entsprechenden Diagramm Hohlkathodenstrom $I_{HK}$ und Beschleunigungsspannung $U_B$. Der Zeitpunkt für den Einsatz der Beschleunigungsspannung kann ebenfalls über eine elektronische Steuerung vorgegeben werden. Er steht in engem Zusammenhang mit dem Zündzeitpunkt der Laserentladung. Die Beschleunigungsspannung für den Elektronenstrahl liegt typisch zwischen 60 und 120 kV bei einer Stromdichte von ca. 5 bis 10 A/cm². Die Halbwertsbreite des Röntgenpulses beträgt 50 bis 100 ns, vgl. Figur 4, wo der Verlauf von $U_B$ und der Röntgenamplitude $U_X$ über der Zeitachse t aufgetragen sind.

Die Plasma-Röntgenröhre liefert vergleichbare Röntgenintensitäten wie Feldemissionsröhren, weist jedoch wesentlich konstantere Betriebsbedingunen bei viel höheren Standzeiten auf.

Die Wirkungsweise ergibt sich zusammengefaßt wie folgt: Nach Anlegen eines positiven Spannungsimpulses an den Zünddraht 6 fliegen freie Elektronen, die sich im Gasvolumen befinden, in Spiralbahnen 13 auf den dünnen Draht zu. Auf seiner aufgerollten Flugbahn legt das Elektron eine größere als die mittlere freie Weglänge für Stoßionisation zurück und erzeugt so zusätzliche Ladungsträger. Ein Hochspannungsimpuls der an die Hohlkathodenanode 3 angelegt wird, erhöht in Wechselwirkung mit den metallischen Wandungen 1.1 - 1.5 des Entladungsgefäßes bzw. Gehäuses 5 die Ladungsträgerdichte im Plasma des Hohlkathodenraumes bzw. Plasmaraumes 1. Der negative Hochspannungsimpuls auf die massive, ausgedehnte Beschleunigungskathode 7 saugt durch das Gitter 9 positive Ionen 10 aus dem Hohlkathodenraum 1 ab, die bei ihrem Auftreffen auf die Kathode 7 Elektronen aus dem Metall herausschlagen. Die Elektronen werden von der Kathode 7 emittiert, zum Gitter 9 hin beschleunigt und durch den Driftraum 1 auf das Röntgentarget 12 hin geschossen. Der Gasdruck in der Röntgenröhre R ist so eingestellt, daß die beschleunigten Elektronen auf ihrer geradlinigen Bahn keine zusätzlichen Stoßprozesse erleiden und bei ihrem Auftreffen auf das Röntgentarget 12 die für die Beschleunigungsspannung charakteristische Bremsstrahlung emittieren.

Es sei noch erwähnt, daß die Beschleunigung der Ladungsträger innerhalb des Beschleunigungsraumes 2 nur in dem Teilraum zwischen dem Kopf der Beschleunigungskathode 7 und dem Gitter 9 erfolgt; der Einfachheit halber ist jedoch der gesamte, die Beschleunigungskathode 7 umgebende Raum innerhalb der Wandteile 5a, 5c, 5e, 5f, 5d und des Gitters 9 als Beschleunigungsraum bezeichnet. Das Gitter 9 ist ein feinmaschiges Drahtgitter mit einer Durchlässigkeit von z.B. 75 %. Es kann aus Molybdän bestehen. Geeignete Metalle für die Hohlkathode 1' sind Nickel oder Aluminium. Generell können die Wände der Hohlkathode 1' und auch des Beschleunigungsraumes 2 aus Aluminium bestehen, welches auf den Wandinnenflächen mit einer Beschichtung aus Nickel versehen ist. Für die Beschleunigungskathode 7 kommen die folgenden Metalle oder Metallegierungen in Betracht: Aluminium und/oder Nickel und/oder CuBe. Ein günstiger Abstand zwischen dem Kopf der Beschleunigungskathode 7 und dem Gitter 9 ist 2 - 3 cm. Ein bevorzugter Druckbereich für den Plasmaraum 1 und den damit kommunizierenden Beschleunigungsraum ist etwa 2 bis 10 Pa (entsprechend etwa 20 - 80 mTorr). Bei diesem Unterdruck wird mit einer Gasfüllung aus Helium gearbeitet. Auch andere Gase, wie Ne oder $H_2$ können als Arbeitsgas verwendet werden.

## Patentansprüche

1. Plasma-Röntgenröhre mit hohen Elektronenstromdichten, insbesondere zur Röntgen-Vorionisierung von Gaslasern, bestehend aus

a) einem Plasmaraum (1), gebildet durch eine vorzugsweise auf Massepotential liegende metallische Hohlkathode (1') mit zwei einander mit Abstand gegenüberliegenden inneren und äußeren Begrenzungswänden (5e, 5f; 5b), von denen die äußere (5b) eine dünne metallische Folie oder eine aufgedampfte Schicht

4

als Röntgentarget (12) und von denen die innere (5e, 5f) wenigstens ein für Elektronen- und Ionenstrahlung hochtransparentes metallisches Beschleunigungsgitter (9) aufweist, welches in Flucht mit dem Röntgentarget (12) liegt;

b) wenigstens einer in den Plasmaraum (1) ragenden Zündelektrode in Form eines dünnen Drahtes (6), der relativ zur Hohlkathode (1') auf positivem Potential liegt;

c) wenigstens einer in einer Seitenwand (5c) der Hohlkathode (1') seitlich zur Flucht Röntgentarget (12) - Beschleunigungsgitter (9) isoliert und gasdicht gehaltenen Anode (3), welche relativ zur Hohlkathode (1') ebenfalls auf positivem Potential liegt;

d) und einem an den Plasmaraum (1) anschließenden, über das Beschleunigungsgitter (9) mit diesem kommunizierenden Beschleunigungsraum (2), umgeben von metallischen Wänden (5a, 5c-5f), die mit den Begrenzungswänden der Hohlkathode (1') gasdicht und elektrisch verbunden sind, wobei in Flucht mit der Strecke Röntgentarget (12) - Beschleunigungsgitter (9) und mit Abstand zu letzterem der Kopf einer Beschleunigungskathode (7) angeordnet ist, deren Schaft mittels einer isolierenden gasdichten Durchführung (8) in einer dem Beschleunigungsgitter (9) gegenüberliegenden Wand (5a) gehalten ist und wobei die Beschleunigungskathode (7) relativ zum Gitter (9) auf hohem Negativpotential liegt.

2. Plasma-Röntgenröhre nach Anspruch 1, **dadurch gekennzeichnet,** daß Plasmaraum (1) und Beschleunigungsraum (2) von einem allseitig metallischen, geerdeten Gehäuse (5) gebildet sind.

3. Plasma-Röntgenröhre nach Anspruch 1 oder 2, **dadurch gekennzeichnet,** daß die Hohlkathode (1') aus Nickel besteht.

4. Plasma-Röntgenröhre nach Anspruch 1 oder 2, **dadurch gekennzeichnet,** daß die Hohlkathode (1') aus Aluminium besteht.

5. Plasma-Röntgenröhre nach Anspruch 1 oder 2, **dadurch gekennzeichnet,** daß die Hohlkathode (1') aus Nickel und Aluminium besteht, insbesondere aus Aluminiumwänden, die auf ihren Innenseiten mit Nickel beschichtet sind.

6. Plasma-Röntgenröhre nach einem der Ansprüche 1 bis 5, **dadurch gekennzeichnet,** daß als Material für die Beschleunigungskathode (7) ein solches aus der Gruppe Al und/oder Ni und/oder Cu Be ausgewählt ist.

7. Plasma-Röntgenröhre nach einem der Ansprüche 1 bis 6, **dadurch gekennzeichnet,** daß bei einem Gasdruck im Bereich von ca. 2 bis 10 Pa außer Helium auch andere Gase, wie z.B. Neon und/oder $H_2$ als Arbeitsgaskomponenten gewählt sind.

8. Plasma-Röntgenröhre nach einem der Ansprüche 1 bis 7, **dadurch gekennzeichnet,** daß das Röntgentarget (12) aus einer dünnen Schicht oder Folie aus einem Material hoher Ordnungszahl, z B. Gold oder Uran, besteht.

9. Verfahren zur Erzeugung von Röntgenstrahlung, insbesondere zur Röntgenvorionisierung von Gaslasern, mit einer Plasma-Röntgenröhre nach einem der Ansprüche 1 bis 8, **dadurch gekennzeichnet,** daß durch Variation von Hohlkathodenstrom und Gasdruck Beschleunigungs spannnung und -strom verändert werden, ohne deren elektrische Anregungsdaten zu ändern.

10. Verfahren nach Anspruch 9, **dadurch gekennzeichnet,** daß sowohl die Niederdruckgasentladungen (Zünddrahtentladung, Hohlkathodenentladung) als auch die Beschleunigung der Ladungsträger im Pulsbetrieb erfolgen.

11. Verwendung der Plasma-Röntgenröhre nach einem der Ansprüche 1 bis 8 als Elektronenkanone bei entsprechend elektronendurchlässigerer Gestaltung des Austrittsfensters (12).

## Claims

1. Plasma X-ray tube with high electron current densities, in particular for X-ray pre-ionisation of gas lasers, comprising

a) a plasma chamber (1) formed by a metal hollow cathode (1'), preferably at earth potential, having two mutually spaced apart and opposite inner and outer boundary walls (5e, 5f; 5b), the outer one (5b) of which has a thin metal foil or a vapour-deposited layer as an X-ray target (12), and the inner (5e, 5f) of which has at least one metal acceleration grid (9), highly transparent to electron and ion radiation, which lies in alignment with the X-ray target (12);

b) at least one ignition electrode in the form of a thin wire (6) protruding into the plasma chamber (1), the wire being at positive potential relative to the hollow cathode (1');

c) at least one anode (3) retained in an insulated and gas-tight manner in one side wall (5c) of the hollow cathode (1') to the side of the pathway of X-ray target (12) to acceleration grid (9), the anode also being at positive potential relative to the hollow cathode (1');

d) and an acceleration chamber (2) adjoining the plasma chamber (1) and communicating with this by means of the acceleration grid (9), surrounded by metal walls (5a, 5c-5f) which are connected to the boundary walls of the hollow cathode (1') in a sealed manner and electrically, the head of an acceleration cathode (7) being arranged in alignment with the path between the X-ray target (12) and the acceleration grid (9) and spaced apart from said grid, the shaft of the acceleration cathode being retained by means of an insulating gas-tight duct (8) in a wall (5a) facing the acceleration grid (9), and the acceleration cathode (7) being at a high negative potential relative to the grid (9).

2. Plasma X-ray tube according to claim 1, characterised in that the plasma chamber (1) and the acceleration chamber (2) are formed by an earthed housing (5) of metal on all sides.

3. Plasma X-ray tube according to claim 1 or 2, characterised in that the hollow cathode (1') is formed of nickel.

4. Plasma X-ray tube according to claim 1 or 2, characterised in that the hollow cathode (1') is formed of aluminium.

5. Plasma X-ray tube according to claim 1 or 2, characterised in that the hollow cathode (1') is formed of nickel and aluminium, in particular of aluminium walls which are coated on their inner surfaces with nickel.

6. Plasma X-ray tube according to one of claims 1 to 5, characterised in that the material for the acceleration cathode (7) is one of those selected from the group Al and/or Ni and/or Cu Be.

7. Plasma X-ray tube according to one of claims 1 to 6, characterised in that with a gas pressure in the range of from about 2 to 10 Pa other gases besides helium, such as e.g. neon and/or $H_2$ are also selected as the working gas components.

8. Plasma X-ray tube according to one of claims 1 to 7, characterised in that the X-ray target (12) is formed of a thin layer or foil of a material of high atomic number, e.g. gold or uranium.

9. Process for the generation of X-radiation, in particular for the X-ray pre-ionisation of gas lasers, using a plasma X-ray tube according to one of claims 1 to 8, characterised in that acceleration voltage and current are varied by varying the hollow cathode current and gas pressure, without changing their electrical excitation data.

10. Process according to claim 9, characterised in that both the low-pressure gas discharges (ignition wire discharge, hollow cathode discharge) and the acceleration of the charge carriers are effected in pulsed operation.

11. Use of the plasma X-ray tube according to one of claims 1 to 8 as an electron gun with correspondingly electron-transparent design of the outlet window (12).

**Revendications**

1. Tube à rayons X à plasma à densités élevées du courant d'électrons, notamment pour la préionisation de lasers à gaz pour la production des rayons X, constitué par

a) une chambre à plasma (1) formée par une cathode métallique creuse (1') placée de préférence au potentiel de masse et comportant deux parois limites intérieure et extérieure (5e,5f;5b), disposées réciproquement en vis-à-vis à une certaine distance et parmi lesquelles la paroi extérieure (5b) possède une feuille métallique mince ou une couche déposée par évaporation sous la forme d'une cible (12) de production de rayons X et la paroi intérieure (5e,5f) comporte au moins une grille métallique accélératrice (9) permettant une transmission élevée du faisceau d'électrons et du faisceau d'ions et alignée avec la cible (12) de production de rayons X;

b) au moins une électrode d'amorçage qui pénètre dans la chambre à plasma (1) et possède la forme d'un fil mince (6), qui est placé à un potentiel positif par rapport à la cathode creuse (1');

c) au moins une anode (3) maintenue d'une manière isolée et étanche aux gaz dans une paroi intérieure (5c) de la cathode creuse (1') latéralement par rapport à l'alignement cible (12) de production de rayons X -grille accélératrice (9) et qui est placé également à un potentiel positif par rapport à la cathode creuse (1'); et

d) une chambre d'accélération (2), qui est raccordée à la chambre à plasma (1), communique avec cette dernière par l'intermédiaire de la grille accélératrice (9) et est entourée par des parois métalliques (5a,5c-5f), qui sont raccordées d'une manière étanche aux gaz et électriquement aux parois limites de la cathode creuse (1'), tandis qu'avec la section cible (12) de production de rayons X - grille accélératrice (9) est alignée, à distance de cette dernière, la tête d'une cathode accélératrice (7), dont la tige est maintenue au moyen d'une traversée isolante et étanche aux gaz (8), dans une paroi (5a) située en vis-à-vis de la grille accélératrice (9), la cathode accélératrice (7) étant placée à un potentiel négatif élevé par rapport à la grille (9).

2. Tube à rayons X à plasma suivant la revendication 1, caractérisé par le fait que la chambre à plasma (1) et la chambre d'accélération (2) sont formées par un boîtier (5) métallique de tous côtés et raccordés à la terre.

3. Tube à rayons X à plasma suivant la revendication 1 ou 2, caractérisé par le fait que la cathode creuse (1') est formée de nickel.

4. Tube à rayons X à plasma suivant la revendication 1 ou 2, caractérisé par le fait que la cathode creuse (1') est réalisée en aluminium.

5. Tube à rayons X à plasma suivant la revendication 1 ou 2, caractérisé par le fait que la cathode creuse (1') est formée de nickel et d'aluminium, et notamment par des parois en aluminium, dont les faces intérieures sont recouvertes de nickel.

6. Tube à rayons X à plasma suivant l'une des revendications 1 à 5, caractérisé par le fait qu'on choisit comme matériau pour la cathode accélératrice (7) un matériau tiré du groupe Al et/ou Ni et/ou Cu Be.

7. Tube à rayons X à plasma suivant l'une des revendications 1 à 6, caractérisé par le fait que dans le cas d'une pression de gaz dans la plage d'environ 2 à 10 Pa, on choisit, en dehors de l'hélium, également d'autres gaz comme par exemple du néon et/ou du $H_2$ en tant que composants du gaz de travail.

8. Tube à rayons X à plasma suivant l'une des revendications 1 à 7, caractérisé par le fait que la cible (12) de production de rayons X est constituée par une couche ou par une feuille mince formée d'un matériau possédant un numéro atomique élevé, par exemple de l'or ou de l'uranium.

9. Procédé pour produire un rayonnement X, notamment pour préioniser des lasers à gaz pour la production de rayons X, comportant un tube à rayons X à plasma suivant l'une des revendications 1 à 8, caractérisé par le fait qu'en modifiant le courant de la cathode creuse et la pression du gaz, on modifie la tension et le courant d'accélération, sans modifier leurs données électriques d'excitation.

10. Procédé suivant la revendication 9, caractérisé par le fait qu'aussi bien les décharges dans le gaz à basse pression (décharges de fil d'amorçage, décharge de cathode creuse) ainsi que l'accélération des porteurs de charge sont réalisées dans le fonctionnement impulsionnel.

11. Utilisation du tube à rayons X à plasma suivant l'une des revendications 1 à 8 en tant que canon à électrons pour un agencement correspondant, transmettant les électrons, de la fenêtre de sortie (12).

FIG 1

$\dfrac{U}{kV}$ ↑

↑ $\dfrac{I}{kA}$

$U_Z$

$I_{HK}$

FIG 2

t →

$\dfrac{U}{kV}$ ↑

↑ $\dfrac{I}{kA}$

$I_{HK}$

$U_B$

FIG 3

t →

$\dfrac{U}{kV}$ ↑

↑ $\dfrac{U_X}{V}$

$U_B$

$U_X$

FIG 4

t →